# EUROPEAN PATENT SPECIFICATION

(11) **EP 3 354 502 B1**
(45) Date of publication and mention of the grant of the patent: **19.05.2021**
(21) Application number: 18153540.2
(22) Date of filing: 25.01.2018
(51) Int. Cl.: B60J 10/24, B60J 10/80

(54) **DOOR FOR A VEHICLE**
TÜR FÜR EIN FAHRZEUG
PORTE POUR VÉHICULE

(30) Priority: 25.01.2017 IT 201700007820
(43) Date of publication of application: 01.08.2018
(73) Proprietor: IVECO FRANCE S.A.S., 69200 Vénissieux (FR)
(72) Inventor: CODRON, Stephane, 69008 LYON (FR)
(74) Representative: Bongiovanni, Simone

(56) References cited:
- EP-A2- 0 841 508
- WO-A1-2008/143597
- CH-A- 381 266
- DE-U1-202006 001 736
- GB-A- 2 362 178
- JP-U- S5 136 819
- JP-U- S6 452 806
- US-A- 4 141 179

## Description

The present invention relates to a door for a vehicle, in particular a door for a vehicle for the public transport of passengers.

Public passenger transport vehicles normally comprise doors which are provided with brushes positioned on their lower edges in order to improve the seal tightness of the vehicle, for example to restrict the entry of air or leaves into the interior of the vehicle, so as to reduce the friction of the leaves of the door with the floor or to reduce the risk of injuries to passengers' feet when the door leaves are operated.

However, the brushes have several disadvantages. In fact, in certain atmospheric conditions, such as wind or rain, they do not entirely prevent the entry of air or rain into the interior of the vehicle. This characteristic does not ensure efficient climate control and the fuel consumption is affected by it.

In addition, the brushes do not prevent passengers' feet from being trapped by the door leaves during their movement.

Examples of known sealing means for doors of public transport vehicles are disclosed in documents DE202006001736 U1, EP0841508 A2, JPS6452806 U, CH381266 or JPS5136819 U.

It is thus necessary to further improve the seal tightness and the safety of doors in public passenger transport vehicles.

The invention aims to resolve the abovementioned problems.

The abovementioned objects are achieved by a door for a public passenger transport vehicle according to claim 1.

Other characteristics and advantages of the invention will become apparent from the following non-limiting description, provided for illustrative purposes, with reference to the attached drawings, in which:
- Figure 1 shows a door according to the present invention in a first operating status; and
- Figure 2 shows the door of Figure 1 in a second operating status.

Doors of public passenger transport vehicles may comprise at lest one leaf configured to rotate around an axis of rotation towards the exterior or the interior of the vehicle (so-called outswing and inswing doors) or a door which slides along an external or internal wall of the vehicle (so-called sliding doors).

The present description refers to a sliding door which slides along a wall of the vehicle, the door comprising a single leaf, without however any loss of generality which could be applied to other types of doors, for example swinging-sliding doors.

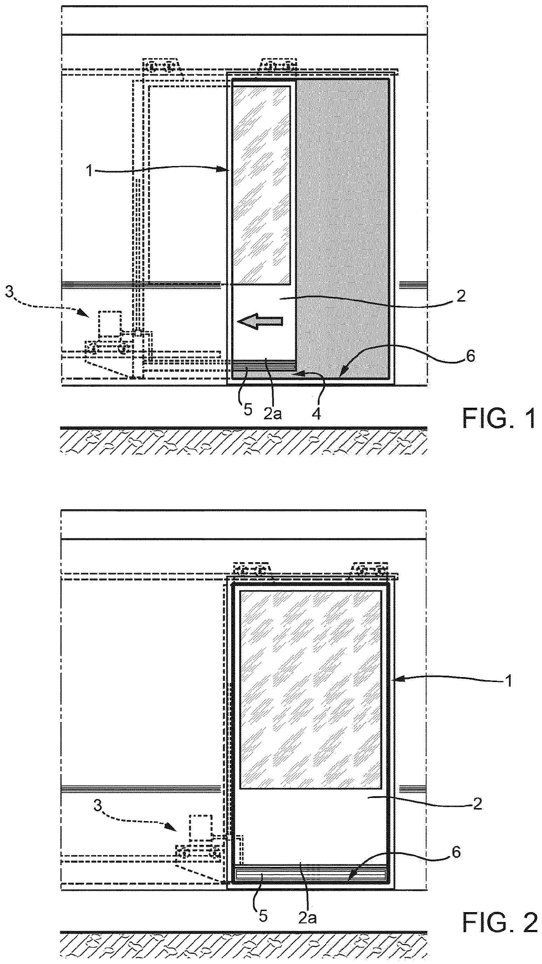

Figure 1 shows a door 1 of a vehicle (not shown) comprising a leaf 2 configured to travel along a wall (not shown) of the vehicle by means of an operating device 3.

The device 3 is preferably a pneumatic device of known type, positioned in a corner of the leaf 2 and coupled to the vehicle's pneumatic circuit.

The leaf 2 is positioned in such a way that it does not touch the floor 6 of the vehicle, leaving a gap 4 so as not to cause friction.

Beneficially, the door 1 also comprises selective sealing means configured to seal the interior space of the vehicle with respect to the exterior when the door 1 is closed and not to obstruct movement of the leaf 2 during the opening the door 1.

The sealing means are preferably positioned close to the lower edge 2a of the leaf 2, and they are beneficially positioned underneath a lower edge 2a of the leaf 2 in the gap 4.

Even more preferably, the sealing means comprise a body which can be inflated by a pneumatic system. The inflatable body is preferably arranged in a coil 5 made from a deformable material, preferably polymer, and positioned underneath the leaf 2.

In a deflated configuration, the coil 5 occupies a space so as not to touch the floor 6 of the vehicle and in an inflated configuration occupies the entire gap 4 between the lower edge 2a of the leaf and the floor 6.

The inflation pressure is preferably lower than 2 bar so as not to trap passengers' feet which could be accidently placed underneath the edge 2a of the leaf 2.

The pneumatic inflation system for the coil 5 is preferably the pneumatic operating system of the leaf 2.

The operation of the door is the following.

When the door 1 is closed (Figure 2), the coil 5 is inflated by means of the device 3 and the coil occupies the entire gap 4 so as to seal the interior of the vehicle.

When the leaf 2 of the door 1 is opening (Figure 1), the coil 5 is deflated, again by means of the device 3. In this configuration, the coil 5 remains clung to the lower edge 2a of the leaf 2, extending into the gap 4 so as not to cause friction with the floor.

From the foregoing, the benefits of a door for a public passenger transport vehicle according to the present invention are apparent.

The selective sealing means make it possible both to ensure the sealing of the interior of the vehicle when the door 1 is closed and not to obstruct movement of the leaf 2 during the opening the door 1.

Use of a coil 5 is simple and cost-efficient and makes it possible to obtain a high degree of sealing of the interior of the vehicle.

The climate control of the interior of the vehicle is thus improved and as a result the fuel consumption is improved.

Use of a pneumatic system 3 which is common to the system for opening the door 1 ensures operation of the coil which is cost-effective and integrated with the vehicle's other pneumatically operated devices.

Thanks to an inflation pressure of less than 2 bar, the coils 5 cannot trap the passengers' feet; if it happens, the coil can conform to the shape of the passenger's foot without injuring it.

Finally, it is apparent that the present invention may be subject to modifications and variations.

For example, selective sealing means could be used on other edges of the leaf 2 or else their positioning could be changed, for example along the edge 2a instead of underneath it but still positioned above the floor 6.

The coils 5 could also be replaced by other equivalent devices, for example sliding walls of elastic material of the edge 2a so as to cover the gap 4.

## Claims

1. A door (1) for a vehicle for the public transport of passengers comprising at least one leaf (2), said door (1) comprising selective sealing means placed underneath the lower edge of said leaf (2) and arranged to seal the interior space of said vehicle with respect to the exterior when said door (1) is closed and so as not to obstruct the movement of said leaf (2) during the opening of said door (1), said selective sealing means comprise an inflatable coil (5) inflatable by means of a pneumatic system, said pneumatic system being the pneumatic opening system (3) of said leaf (2) ,
**characterised in that**, when it is inflated the coil (5) occupies the entire gap (4) at the bottom of said leaf (2) to seal the interior of the vehicle, and **in that** when the body (5) deflates it remains clung to said lower edge (2a) of said leaf (2), extending into said gap (4) so as to avoid any friction with the floor (6) of the vehicle,
the coil (5) being realized in polymeric material and being inflated at a pressure lower than 2 bar in order to avoid injures to passengers in said vehicle.

2. A vehicle comprising a door (1) according to any one of the claims 1.

## Patentansprüche

1. Tür (1) für ein Fahrzeug für den öffentlichen Personenverkehr, umfassend zumindest ein Blatt (2), welche Tür (1) selektive Dichtungsmittel umfasst, die unter der Unterkante des Blatts (2) angeordnet sind, um den Innenraum des Fahrzeugs gegenüber dem Außenraum abzudichten, wenn die Tür (1) geschlossen ist, derart, dass die Bewegung des Blatts (2) während des Öffnens der Tür (1) nicht behindert wird, welche selektiven Dichtungsmittel einen aufblasbaren Wulst (5) umfassen, der durch ein pneumatisches System aufblasbar ist, welches pneumatische System das pneumatische Öffnungssystem (3) des Blatts (2) ist,
**dadurch gekennzeichnet, dass** der Wulst (5) im aufgeblasenen Zustand den gesamten Zwischenraum (4) an der Unterseite des Blatts (2) einnimmt, um den Innenraum des Fahrzeugs abzudichten, und dass dann, wenn der Körper (5) deflatiert, dieser an der Unterkante des Blatts (2) angeschmiegt bleibt und sich in den Zwischenraum (4) erstreckt, so dass eine Reibung mit dem Boden (6) des Fahrzeugs vermieden wird,
wobei der Wulst (5) aus einem Polymermaterial hergestellt ist und mit einem Druck von weniger als 2 bar aufgeblasen wird, um Verletzungen der Fahrzeugpassagiere zu vermeiden.

2. Fahrzeug, umfassend eine Tür (1) gemäß Anspruch 1.

## Revendications

1. Porte (1) pour un véhicule pour le transport public de passagers comprenant au moins un battant (2), ladite porte (1) comprenant des moyens d'isolation sélectifs placés en dessous du bord inférieur dudit battant (2) et agencés pour isoler l'espace intérieur dudit véhicule par rapport à l'extérieur lorsque ladite porte (1) est fermée et de manière à ne pas gêner le mouvement dudit battant (2) durant l'ouverture de ladite porte (1), lesdits moyens d'isolation sélective comprennent une bobine(5) gonflable au moyen d'un système pneumatique, ledit système pneumatique étant le système d'ouverture pneumatique (3) dudit battant (2),
**caractérisée en ce que**, lorsqu'elle est gonflée, la bobine (5) occupe l'interstice (4) entier au bas dudit battant (2) pour isoler l'intérieur du véhicule, et **en ce que** lorsque le corps (5) se dégonfle, il reste collé audit bord inférieur (2a) dudit battant (2), s'étendant dans ledit interstice (4) de manière à éviter tout frottement avec le plancher (6) du véhicule,
la bobine (5) étant réalisée en matériau polymère et étant gonflée à une pression inférieure à 2 bars afin d'éviter des blessures à des passagers dans ledit véhicule.

2. Véhicule comprenant une porte (1) selon l'une quelconque des revendications 1.
